# EUROPEAN PATENT APPLICATION

(11) **EP 3 651 103 A1**
(43) Date of publication of application: **13.05.2020**
(21) Application number: 18871911.6
(22) Date of filing: 30.10.2018
(51) Int. Cl.: G06Q 30/02, G06K 9/00, G06Q 30/06

(54) **DEVICE, SYSTEM AND METHOD FOR PROVIDING SERVICE RELATING TO ADVERTISING AND PRODUCT PURCHASE BY USING ARTIFICIAL-INTELLIGENCE TECHNOLOGY**

(30) Priority: 30.10.2017 KR 20170142512
(71) Applicant: Kolon Industries, Inc., Seoul 07793 (KR)
(72) Inventor: HAHN, Jung-Seok, Seoul 07793 (KR); LEE, Hyun-Soo, Seoul 07793 (KR); YOO, Jun-Sang, Seoul 07793 (KR)
(74) Representative: Ter Meer Steinmeister & Partner
(86) International application number: PCT/KR2018/013020
(87) International publication number: WO 2019/088661

(57) **Abstract**

Provided is an advertising system. The advertising system comprises: an information analysis unit which analyzes first user information relating to at least one out of the sex, age and eye tracking of a user and analyzes second user information relating to the facial expression and eye tracking of the user, based on a camera image; and an advertisement providing unit which determines topic information for the user based on the first user information and displays a first advertisement associated with the topic information on a display device.

## Description

### [Technical Field]

The present invention relates to a device, a system, and a method for providing a service relating to personalized advertising and product purchase by using recognition and estimation data about facial expression, behavior, sex, and age.

### [Background Art]

Building a machine with intelligence that imitates a human brain function has been a task continued from the dawn of information technology (IT). Attempts at symbolic artificial intelligence (AI) begun in 1950s were started. With the development of information processing machines based on artificial neural networks, which imitate neural cells considered as basic computing units of the brain, it is possible to process character recognition, simple object recognition, and the like.

However, there is a limit to dealing with complex information in the real world (e.g. natural images on the web, voices, texts, YouTube videos, human faces, facial expressions, postures, behaviors, etc.). In a method for solving this problem, there is a deep learning technology. For example, in the object recognition contest based on 1.3 million image labeling data (e.g. Large Scale Visual Recognition Challenge in 2012), a group using the deep learning technology receives attention while exhibiting significantly higher performance than a computer vision technology (e.g. scale invariant feature transform (SIFT), histogram of oriented gradient (HOG), etc.) using existing hand-crafted features.

### [Disclosure]

### [Technical Problem]

The present has been made in an effort to provide a method, a device, and a system for providing user-customized product, service, and advertisement and a purchase service thereabout by using an AI technology.

### [Technical Solution]

According to an embodiment of the present invention, provided is an advertising system. The advertising system may include an information analysis unit configured to analyze first user information about at least one of sex, age, and eye tracking of a user and analyze second user information about a facial expression and eye tracking of the user, from an image of a camera; and an advertisement providing unit configure to determine topic information for the user based on the first user information and display a first advertisement associated with the topic information by a display device.

The advertisement providing unit may determine a first concentration indicating the degree of concentration of the user in the first advertisement based on the second user information and display a second advertisement including more information than the first advertisement based on the first concentration.

The advertising system may further include a purchase processing unit configured to perform a payment processing on the product when order information about a product related to the first advertisement or the second advertisement is input.

When the first advertisement is displayed on the display device, the advertisement providing unit may calculate the first concentration by eye tracking for the eyes of the user and determines whether to display the second advertisement based of the user's facial expression and the first concentration for the first advertisement.

The advertisement providing unit may determine whether to continuously display the second advertisement by the display device, based on the second concentration indicating the degree of concentration of the user in the second advertisement and the user's facial expression of the second advertisement.

The purchase processing unit may transmit the order information to a mobile terminal having a payment processing function wirelessly when the order information on the product is input.

The display device may be installed in a customer's seat in a transportation means for transporting people.

The first advertisement and the second advertisement may be displayed in a first screen area of the display device and the product may be displayed in a second screen area of the display device.

The information analyzing unit may track the user from the image, recognizes the user's facial expression, estimates the user's sex, and estimates the user's age by using an AI algorithm including an object tracking algorithm, a facial expression recognition algorithm, a sex estimating algorithm, and an age estimating algorithm.

The advertisement providing unit may change advertisement providing by using a matching result between the user's behavior and a predefined behavior pattern.

When the first advertisement is displayed by the display device, the eye tracking may include tracking whether the user's eye focus is out of the screen area of the display device and how long the eye focus is out of the screen area.

The advertisement providing unit may display the first advertisement on the display device when it is determined that the eye focus of the user faces the screen area of the display device based on the eye tracking information of the first user information.

The user's behavior may include at least one of a behavior of turning the head or the body of the user, a behavior of shaking a hand, and a behavior of approaching the display device while the first advertisement is displayed on the display device.

According to another embodiment of the present invention, there is provided a method for a service relating to advertising and product purchase by an advertising system. The method for providing the service may include analyzing first user information about at least one of sex, age, and eye tracking of a user and second user information about a facial expression and eye tracking of the user, from an image of a camera; determining topic information for the user based on the first user information; displaying a first advertisement related to the topic information on a display device; determining a first concentration indication the degree of concentration of the user in the first advertisement based on the second user information; and displaying a second advertisement including more information than the first advertisement on the display device based on the first concentration and the user's facial expression for the first advertisement.

The analyzing may include analyzing third user information about a behavior taken by the user while the first advertisement is displayed on the display device.

The displaying may include determining whether to provide the second advertisement or whether to provide additional product information related to the first advertisement, based on the third user information.

The method for providing the service may further include performing a payment processing on the product when order information about a product related to the first advertisement or the second advertisement is input.

### [Advantageous Effects]

According to the embodiment of the present invention, it is possible to provide a method, a device, and a system for providing user-customized product, service, and advertisement and a purchase service thereabout by recognizing various types of information (e.g. user's facial expressions, age, behavior, and movement) on a user.

Further, according to the embodiment of the present invention, it is possible to improve sales of advertisements and merchandise sales in aircrafts, trains, etc., where display devices (or platforms) are installed.

Further, according to the embodiment of the present invention, since the advertisement suitable for the seat of a specific individual is exposed to the specific individual, it is possible to provide efficiently advertisements having effects and meanings to a user.

Further, according to the embodiment of the present invention, since user reactions are recognized by the user's facial expressions, and based on the data (e.g. good feelings or dislike) collected through this and real-time data (e.g. real-time eye tracking data, real-time recognized and estimated facial expressions and behavior data), a service relating to advertising and product sales for each user is provided, and thus it is possible to improve satisfaction of advertising and product sales.

Further, according to the embodiment of the present invention, since the duty-free article sales that have been issued as paper booklets may be provided by display devices, it is possible to provide more product groups and reduce the manufacturing costs of the paper booklets.

### [Description of Drawings]

FIG. 1 is a diagram illustrating an advertising system according to an embodiment of the present invention.
FIG. 2 is a diagram illustrating a method for providing a service relating to personalized advertising and personalized product purchase according to an embodiment of the present invention.
FIG. 3 is a diagram illustrating a display device according to an embodiment of the present invention.
FIG. 4 is a diagram illustrating a method for recognizing person's age, sex, facial expression, behavior, etc. from a camera image by an information analysis device according to an embodiment of the present invention.
FIG. 5 is a diagram illustrating a face recognition result and a behavior recognition result according to an embodiment of the present invention.
FIG. 6 is a diagram illustrating a method for providing a service when an advertising system 1000 is applied to aircrafts according to an embodiment of the present invention.
FIG. 7 is a diagram illustrating a computing device according to an embodiment of the present invention.

### [Best Mode]

Hereinafter, an embodiment of the present invention will be described in detail with reference to the accompanying drawings so as to be easily implemented by those skilled in the art. However, the present invention may be embodied in many different forms and are limited to embodiments described herein. In addition, a part not related with a description is omitted in order to clearly describe the present invention in the drawings and throughout the specification, like reference numerals designate like elements.

In this specification, the duplicated description of the same components will be omitted.

It should be understood that, when it is described that an element is "coupled" or "connected" to another element, the element may be "directly coupled" or "directly connected" to another element or "coupled" or "connected" to another element through a third element. In contrast, it should be understood that, when it is described that a component is "directly connected to" or "directly accesses" another component, it is understood that no element is present between the element and another element.

Further, the terminology used in the present specification is used for describing only a specific embodiment and is not intended to limit the present invention.

Further, a singular form used in the present specification may include a plural form unless otherwise explicitly indicated in the context.

In the present application, it should be understood that term "include" or "have" indicates that a feature, a number, a step, an operation, a component, a part or a combination thereof described in the specification is present, but does not exclude a possibility of presence or addition of one or more other features, numbers, steps, operations, components, parts or combinations thereof, in advance.

In the present specification, the term 'and/or' includes a combination of a plurality of disclosed items or any item of the plurality of disclosed items. In the present specification, 'A or B' may include 'A', 'B', or 'both A and B' .

Hereinafter, a device, a method, and a system for providing user-customized product, service, advertisement, and the like by information processing based on an artificial intelligence algorithm (e.g. deep learning algorithm) and providing a purchase service for the same will be described. Here, the artificial intelligence algorithm (e.g. deep learning algorithm) may recognize various types of information (e.g. user's facial expression, age, behavior, sex, or movement) on a user to distinguish characteristics according to an individual's situation. In the present specification, for convenience of description, an embodiment of the present invention will be described as an example in which the artificial intelligence technology is a deep learning technology. However, this is only an example, and the present invention may be applied when another artificial intelligence technology other than the deep learning technology is used.

Specifically, the user is detected and tracked by a camera installed (or attached) onto the display device. The tracked user's behavior, emotion, age, or sex is estimated, and through this, the user's age group, sex, and feelings are analyzed. Based on the analysis result, contents, products, and services are exposed to the user, and payment for products is performed on the display device. When the payment is completed, the corresponding product is delivered to the user.

That is, the system (hereinafter, 'advertising system') for providing a service relating to personalized advertising and purchase by using estimated data about the facial expressions, behavior, sex, or age of a customer according to the embodiment of the present invention may automatically distinguish a person and objects by a camera or an image and estimate the emotion, age, and sex of the tracked person. In addition, the advertising system may recommend advertisements, products, and services specialized to each customer by using the estimation result.

An existing computer vision technology uses processed features suitable for a specific task. However, a deep-learning model to be applied to the advertising system according to the embodiment of the present invention receives a large amount of data by itself and learns representation expressing well the statistical characteristics of the data. Through this, the present invention may have excellent performance in various recognition technology fields.

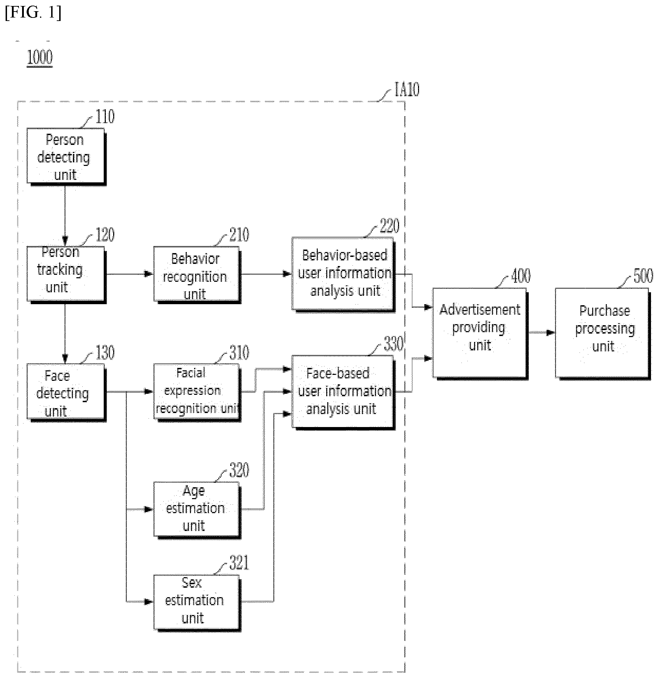

FIG. 1 is a diagram illustrating an advertising system according to an embodiment of the present invention.

The advertising system 1000 may provide a service relating to personalized advertising and personalized product purchase using at least one of facial expression recognition data, age estimation data, sex estimation data, and behavior recognition data. That is, the advertising system 1000 may recognize and analyze a facial expression, age, sex, or behavior of the customer to provide a service relating to customer-specific advertising and product purchase.

The advertising system 1000 may use a deep learning algorithm that recognizes various types of information (e.g. facial expressions, age, sex, or behavior) of the user to distinguish characteristics according to a user's situation. The deep learning algorithm applied to the advertising system 1000 may estimate the emotion, sex, and age of the user and/or recognize the user's behavior.

Hereinafter, for convenience of description, a case where the advertising system 1000 is applied to an aircraft environment will be described as an example. However, this is just illustrative, and the advertising system 1000 may be applied to environments (e.g. aircrafts, trains, etc. for transporting people) in which the display device is installed. For example, the present invention may be applied to transportation means in which the display device is installed separately for each user (e.g. 1:1 recognition).

Specifically, the advertising system 1000 may include an information analyzing unit IA10, an advertisement providing unit 400, and a purchase processing unit 500.

The information analyzing unit IA10 may analyze user information on age, facial expression, sex, or behavior of the user from the image of the camera. For example, the information analyzing unit IA10 may track the user from the camera image, recognize the user's facial expression, estimate the user's sex, and estimate the user's age by using a deep learning algorithm including an object tracking algorithm, a facial expression recognition algorithm, a sex estimating algorithm, and an age estimating algorithm. For another example, the information analyzing unit IA10 may recognize the user's behavior by using a deep learning algorithm including a behavior recognition algorithm.

Specifically, the information analyzing unit IA10 may include a person detecting unit 110, a person tracking unit 120, a face detecting unit 130, a behavior recognition unit 210, a behavior-based user information analysis unit 220, a facial expression recognition unit 310, an age estimation unit 320, a sex estimation unit 321, and a face-based user information analysis unit 330.

The person detecting unit 110 may detect a person from the image of the camera.

The person tracking unit 120 may track the person detected by the person detecting unit 110 in the image. Specifically, the person tracking unit 120 may use an object tracking algorithm. For example, the object tracking algorithm of the person tracking unit 120 may predict where an object is located and compare an actually detected location with the predicted object location. In addition, the object tracking algorithm of the person tracking unit 120 may repeat a process of improving the prediction accuracy of the next location and improving the tracking stability by the position comparison.

The face detecting unit 130 may detect a face region from the person detected by the person detecting unit 110.

The behavior recognition unit 210 may recognize a person's behavior (e.g. walking, standing, sitting, jumping, waving, etc.) through a behavior recognition algorithm. Specifically, the behavior recognition algorithm of the behavior recognition unit 210 may design and advance a CNN model to meet various conditions (e.g. behavior classes, recognition speed, recognition accuracy, model operating environment, etc.) based on a two-stream convolutional neural network (CNN) structure using red, green, and blue (RGB) images and an optical flow. The behavior recognition algorithm of the behavior recognition unit 210 may perform data set additional learning to improve accuracy in various environments (e.g. image viewpoint, brightness, obscured by another object, etc.).

The behavior-based user information analysis unit 220 may analyze behavior-based user information by using the behavior recognition result of the behavior recognition unit 210.

The facial expression recognition unit 310 may recognize person's facial expressions (e.g. anger, fear, sadness, happiness, surprise, disgust, neutrality, etc.) using a facial expression recognition algorithm. The facial expression recognition algorithm of the facial expression recognition unit 310 may learn a CNN model using an ImageNet consisting of about 1 million images or more, and obtain a deep CNN model for facial expression recognition. The facial expression recognition algorithm of the facial expression recognition unit 310 may perform fine-tuning of the obtained deep CNN model, and may improve the performance of the deep CNN model.

The age estimation unit 320 may estimate a person's age by using an age estimation algorithm based on a person's face. In detail, the age estimation algorithm of the age estimation unit 320 may improve the accuracy of the age estimation by using a method of detecting a face by changing a face angle. The age estimation algorithm of the age estimation unit 320 may learn the deep CNN model through the ImageNet, and obtain a model for estimating age by performing transfer learning by the dataset. The age estimated by the age estimation unit 320 may be used to estimate a person's current emotion.

The sex estimation unit 321 may estimate a person's sex by using a sex estimation algorithm.

The face-based user information analysis unit 330 may analyze face-based user information by using the facial expression recognition result of the facial expression recognition unit 310, the age estimation result of the age estimation unit 320, and the sex estimation result of the sex estimation unit 321.

The advertisement providing unit 400 may display an informal advertisement (e.g. teaser advertisement) for the user on the display device based on the user information analyzed by the information analysis unit IA10. The advertisement providing unit 400 may display, on the display device, a formal advertisement (or a detailed advertisement) including more information than the informal advertisement, based on a concentration indicating the degree of concentration of the user in the informal advertisement.

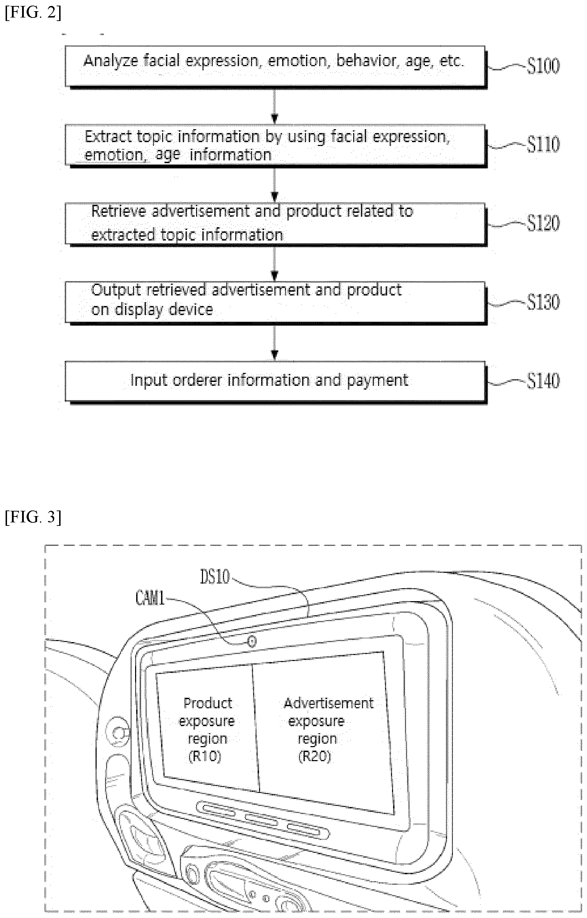

Specifically, the advertisement providing unit 400 may determine an advertisement and a product suitable for the user by using at least one of the analysis result of the behavior-based user information analysis unit 220 and an analysis result of the face-based user information analysis unit 330. For example, the advertisement providing unit 400 may match the analysis result of the behavior-based user information analysis unit 220 with a predefined behavior pattern, and control the provision (e.g. starting display, stopping display, changing display advertisement, changing display size, providing detailed product information, etc.) of an advertisement (or a product) according to the matching result. If the user behavior that explicitly or implicitly denies viewing the advertisement (or product) is analyzed, the advertisement providing unit 400 may change or stop the display of the advertisement (or the product) in accordance with the analysis result. A method of determining an advertisement (or product) suitable for the user by using the analysis result of the face-based user information analysis unit 330 will be described below with reference to FIG. 2.

The advertisement providing unit 400 may display an advertisement and a product suitable for the user on the display device included in the advertising system 1000.

For example, when the informal advertisement is displayed on the display device, the advertisement providing unit 400 may calculate the concentration of the informal advertisement by eye tracking of the eyes of the user and determine whether or not to display the formal advertisement based on the concentration and the user's facial expression of the informal advertisement. The advertisement providing unit 400 may determine whether to continuously display the formal advertisement on the display device, based on the concentration indicating the degree of concentration of the user in the formal advertisement and the user's facial expression of the formal advertisement.

The purchase processing unit 500 may perform a purchase processing on a product selected by the user. Specifically, when order information about a product related to an advertisement (for example, informal advertisement or formal advertisement) is input, the purchase processing unit 500 may perform a payment processing on the product in various methods. For example, when the product order information is input by a touch screen of the display device, the purchase processing unit 500 may wirelessly transmit the product order information to a mobile terminal (for example, a crew's holding terminal) having a payment processing function. For another example, the purchase processing unit 500 may perform the payment processing by a built-in payment module or may perform the payment processing through the crew's holding terminal.

Meanwhile, the purchase processing unit 500 may match the analysis result of the behavior-based user information analysis unit 220 with a predefined behavior pattern, and control the purchase processing according to the matching result. If the user behavior of affirming the purchase of the product related to the advertisement is analyzed, the purchase processing unit 500 may perform the purchase processing for the corresponding product according to the analysis result.

FIG. 2 is a diagram illustrating a method for providing a service relating to personalized advertising and personalized product purchase according to an embodiment of the present invention. In addition, FIG. 3 is a diagram illustrating a display device according to an embodiment of the present invention.

The advertising system 1000 may analyze a passenger's expression, age, sex, or behavior through face detection, facial expression recognition, age estimation, sex estimation, or behavior recognition (S100). Specifically, the advertising system 1000 may analyze face recognition, facial expression, sex, age (age group), or behavior by a camera or an image. A display (e.g. inflight entertainment and connectivity (IFEC)) camera may be installed in the cabin (e.g. in front of the cabin, in customer seats, etc.).

The advertising system 1000 may extract topic information by using the analyzed emotion information, age information, or sex information (S110). Specifically, the advertising system 1000 may extract topic information (e.g. class data) for retrieving database information by using data analyzing at least one of passenger's age, sex, and emotional state.

The advertising system 1000 may retrieve advertisements and products related to the extracted topic information (S120). Specifically, the advertising system 1000 may retrieve classification according to topic information and data related to topic information in the database. The advertising system 1000 may check the extracted advertisement and product information in relation to the retrieved data.

The advertising system 1000 may display the retrieved advertisement and product on the display device (S130). Here, as illustrated in FIG. 3, the display device of the advertising system 1000 may be a display device DS10 installed in a customer's seat in an aircraft. A screen of the display device DS10 may include a product exposure region R10 and an advertisement exposure region R20. The product is displayed in the product exposure region R10, and the advertisement is displayed in the advertisement exposure region R20. The product exposure region R10 or the advertisement exposure region R20 may occupy the entire screen of the display device DS10 by a user input or the like. The top of the display device DS10 may include a camera CAM1 for recognition and estimation operations described in this specification.

Specifically, the advertising system 1000 may display advertisements and products (e.g. in-flight specification items) suitable for topic information in a simplified form (or informal form) on the display device DS10 (hereinafter, referred to as "process S131"). For example, the advertising system 1000 may simply expose (e.g. display on the display device) products and advertisements according to the sex and age of the analyzed customer with reference to Table 1 (product and advertisement classification) and Table 2 (exposure target classification of product and advertisement). When there are a plurality of products (or advertisements) suitable for the customer, the advertising system 1000 may sequentially display the plurality of products (or advertisements).

**[Table 1]**

| Classification of product/advertisement | Type of product/advertisement |
|---|---|
| A | Men's skincare |
| A1 | Women's skincare |
| B | Men's makeup |
| B1 | Women's makeup |
| C | Men's body/hair |
| C1 | Women's body/hair |
| D | Men's perfume |
| D1 | Women's perfume |
| E | Men's bag/wallet |
| E1 | Women's bag/wallet |
| F | Men's watch/j ewelry |
| F1 | Women's watch/j ewelry |
| G | Men's fashion/goods |
| G1 | Women's fashion/goods |
| H | Digital/living |
| I | Foods |
| J | Kids, children |
| K | Sports |

**[Table 2]**

| Sex/age | 10s or less | 10s to 20s | 30s | 40s | 50s | 60s or more |
|---|---|---|---|---|---|---|
| Men | I, J | A, B, C, D, E, F, G | A, B, C, D, E, F, G, H, J, K | A, B, C, D, E, F, G, H, I, K | D, E, F, G, H, I, K | D, E, F, G, H, I, K |
| Women | I, J | A1, B1, C1, D1, E1, F1, G1 | A1, B1, C1, D1, E1, F1, G1, H, I, J | A1, B1, C1, D1, E1, F1, G1, H, I, K | D1, E1, F1, G1, H, I, K | D1, E1, F1, G1, H, I, K |

For example, when the sex of the customer analyzed by the advertising system 1000 is male and the age of the customer is 20s, the advertising system 1000 may sequentially display a men's skincare (A), a men's makeup (B), a men's body/hair (C), a men's perfume (D), a men's bag/wallet (E), a men's watch/jewelry (F), and a men's fashion/goods (G) on the display device.

The advertising system 1000 may analyze concentration (e.g. calculating time taken when the eyes gaze at the screen of the display device through eye tracking) and facial expression (e.g. facial expression recognition based on a facial expression recognition algorithm) for the advertisement (or product contents) exposed in an informal form in process S131. The advertising system 1000 may determine whether to expose (e.g. display on the display device) a detailed advertisement (or detailed product information) based on the analyzed concentration and facial expression (hereinafter, 'process S132'). For example, if the customer's concentration on the informal advertisement for the men's skincare (A) is greater than a threshold (e.g. when the customer watches the informal advertisement for 5 seconds or more) and the analyzed facial expression of the corresponding customer is a happy expression, the advertising system 1000 may display the detailed advertisement (or detailed product information) of the men's skincare (A) on the display device.

The advertising system 1000 may determine the degree of interest in the corresponding advertisement (or product) by the concentration and the facial expression (e.g. the expression recognition based on the expression recognition algorithm) with respect to the detailed advertisement (or the product) exposed in process S132. For example, if the customer's interest in the advertisement (or product) of the men's skincare (A) is greater than the threshold, the advertising system 1000 may continuously expose (e.g. display on the display device) the advertisement (or product) of the men's skincare (A). The advertising system 1000 may expose the advertisement or the product to the customer based on a preset maximum number of exposure times (e.g. three times) and a maximum exposure time (e.g. three minutes). For example, if the customer's interest in the advertisement (or product) of the men's skincare (A) is greater than the threshold, the advertising system 1000 may repetitively display the advertisement (or product) of the men's skincare (A) at least three times for at least 3 minutes.

The advertising system 1000 may be linked with a smartphone of the customer. In detail, the advertising system 1000 may transmit information about an advertisement or a product to a smartphone. For example, the advertising system 1000 may transmit a uniform resource locator (URL) for checking the details of the advertisement to the smartphone of the customer. For another example, the advertising system 1000 may transmit a URL for checking the details of the product to the smartphone of the customer.

The advertising system 1000 may perform a payment processing when receiving information necessary for ordering a product (S140). Specifically, when orderer information (e.g. customer's name, customer's passport number, flight number (e.g. automatically inputable), etc.) about the exposed product is input, the advertising system 1000 may transmit product order information (e.g. product information, orderer information, etc.) to a crew's holding terminal. For example, when orderer information about a product of men's skincare (A) is input by a touch screen of the display device, the advertising system 1000 may transmit product order information about the product of men's skincare (A) to the crew's holding terminal. The crew's holding terminal may check the product order information.

When the ordered product is delivered to the customer, the payment processing (e.g. card payment processing, etc.) for the ordered product may be performed by the crew's holding terminal.

The advertising system 1000 may store analysis information (e.g. pattern data, purchase decision degree according to the concentration of the advertisement (or product), etc.) on the customer purchasing the product in the database. The advertising system 1000 may perform deep learning using the information stored in the database. Specifically, the advertising system 1000 may collect pattern data about a product purchase customer and object-related data including a product (or content) selected by the customer. The advertising system 1000 may perform pattern analysis on the customer through continuous learning based on the collected pattern data and object-related data. The advertising system 1000 may establish a relationship between a passenger attribute and an advertisement attribute, and may display advertisement information or product information extracted from the database to similar passengers. The advertising system 1000 may receive feedback a response to the advertisement information or the product information extracted from the database, and may determine whether to be suitable for the advertisement, the product, or the customer using this.

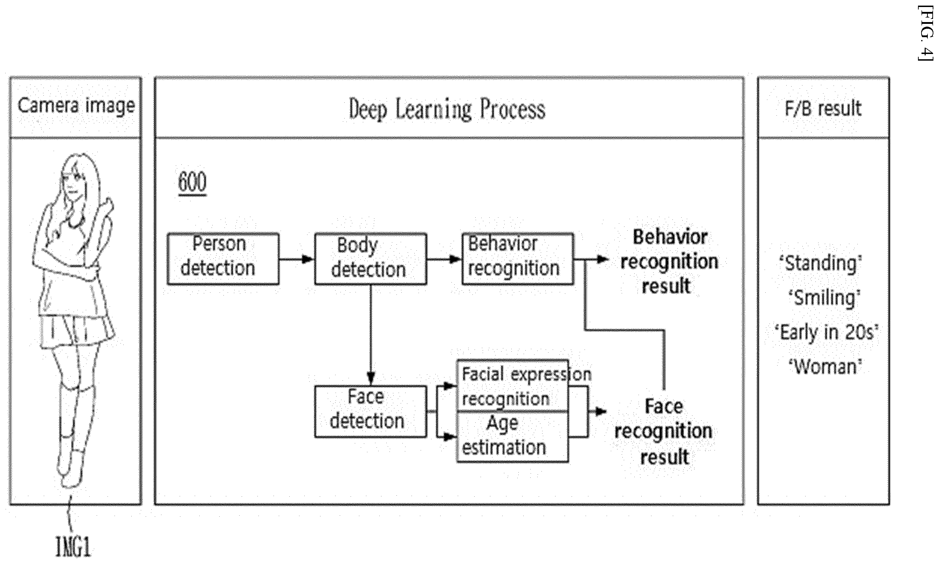

FIG. 4 is a diagram illustrating a method for recognizing person's age, sex, facial expression, behavior, etc. from a camera image by an information analysis device according to an embodiment of the present invention.

In the advertising system 1000, an information analysis device 600 that has learned data through a deep learning technology may detect a person from an image displayed on a camera, recognize (or estimates) the age, sex, and behavior of the detected person, and feedback the recognition result. Specifically, the information analysis device 600 may include an information analysis unit IA10.

The information analysis device 600 may detect a person from an image of the camera by using a deep learning algorithm and detect a body from the detected person. The information analysis device 600 may recognize a behavior from the detected body. For example, the information analysis device 600 may recognize a behavior such as walking, standing, sitting, jumping, or shaking the arm, and may output a behavior recognition result.

The information analysis device 600 may recognize a face from the detected person. The information analysis device 600 may recognize a facial expression and estimate age and sex from the detected face. For example, the information analysis device 600 may recognize a facial expression of anger, fear, sadness, happiness, surprise, disgust, neutrality, and the like, and may output a face recognition (or estimation) result.

As illustrated in FIG. 4, when a camera image IMG1 is input to the information analysis device 600, the information analysis device 600 may feedback the face recognition result and the behavior recognition result, such as 'standing', 'smiling', 'early in 20s', and 'women', as user information.

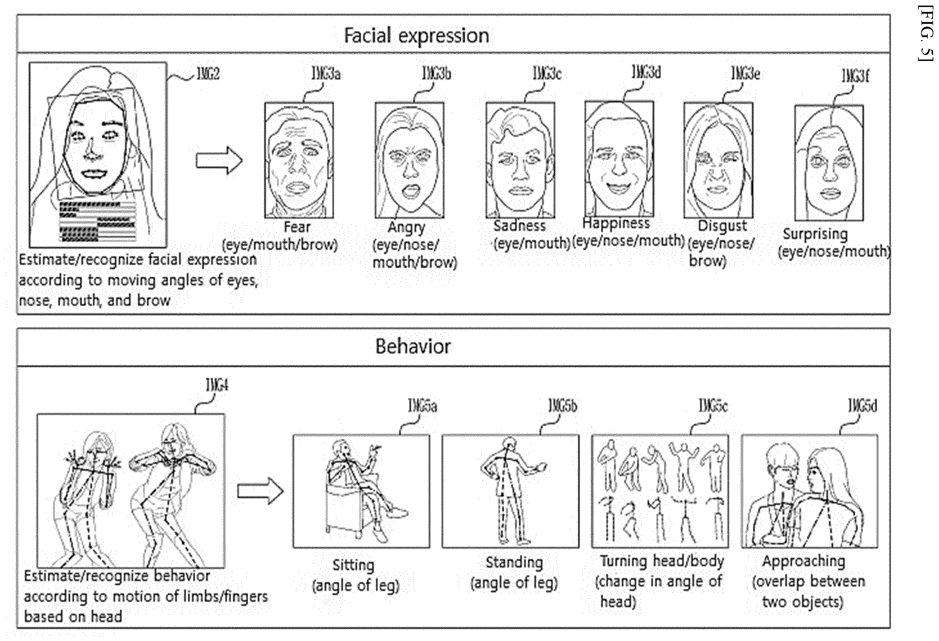

FIG. 5 is a diagram illustrating a face recognition result and a behavior recognition result according to an embodiment of the present invention.

The information analysis device 600 may calculate moving angles of an eye, a nose, a mouth, and a brow from a camera image IMG2 and recognize (or estimate) a facial expression according to the calculated angle. For example, when a camera image IMG3a is input, the information analysis device 600 may recognize a fear expression based on the moving angles of the eyes, the mouth, and the brow. For another example, when a camera image IMG3b is input, the information analysis device 600 may recognize an angry expression based on the moving angles of the eyes, the mouth, and the brow. For yet another example, when a camera image IMG3c is input, the information analysis device 600 may recognize a sad expression based on the moving angles of the eyes, the mouth, and the brow. For still another example, when a camera image IMG3d is input, the information analysis device 600 may recognize a happy expression based on the moving angles of the eyes, the mouth, and the brow. For still yet another example, when a camera image IMG3e is input, the information analysis device 600 may recognize a disgusting expression based on the moving angles of the eyes, the mouth, and the brow. For still yet another example, when a camera image IMG3f is input, the information analysis device 600 may recognize a surprising expression based on the moving angles of the eyes, the mouth, and the brow.

The information analysis device 600 may calculate a motion of a limb and a motion of a finger, and the like based on the head from a camera image IMG4, and may recognize (or estimate) a behavior according to the calculated motion. For example, when a camera image IMG5a is input, the information analysis device 600 may recognize a sitting behavior based on an angle and a motion of the leg. For another example, when a camera image IMG5b is input, the information analysis device 600 may recognize a standing behavior based on an angle and a motion of the leg. For yet another example, when a camera image IMG5c is input, the information analysis device 600 may recognize a head or body turning behavior based on an angle change and a motion of the head. For still another example, when a camera image IMG5d is input, the information analysis device 600 may recognize an approaching behavior based on the overlap and motions of a plurality of objects.

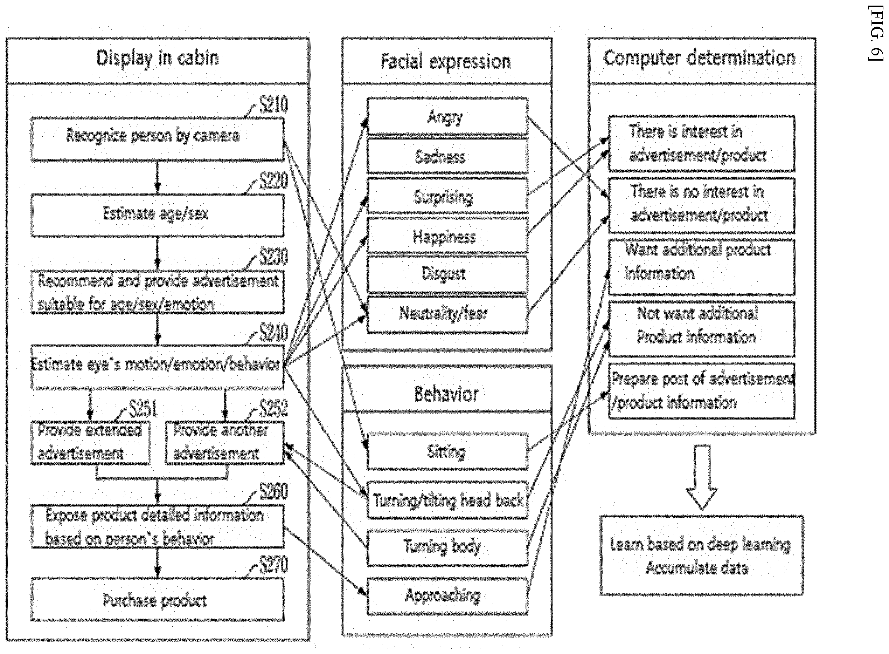

FIG. 6 is a diagram illustrating a method for providing a service when the advertising system 1000 is applied to aircrafts according to an embodiment of the present invention. A display device DS10 may be installed in a customer's seat in the aircraft.

The advertising system 1000 may recognize a person (user) in a camera image by a camera (S210). For example, the advertising system 1000 may recognize a user sitting in a seat with a neutral expression or fear expression. In this case, the advertising system 1000 may prepare to a post of advertisement or product information.

The advertising system 1000 may estimate age and sex of the recognized user (S220).

The advertising system 1000 may comprehensively consider the estimated age, sex, or emotion, and provide a recommendation advertisement corresponding thereto (S230).

The advertising system 1000 may estimate eye movement, emotion (facial expression), and behavior of the user with respect to the recommended advertisement (S240).

The advertising system 1000 may provide an extended advertisement or another advertisement in comprehensive (or complex) consideration of the result estimated in step S240 (S251 and S252). Specifically, when the estimation result of step S240 indicates that the user's interest in the recommended advertisement in step S230 is greater than or equal to a reference value, the advertising system 1000 may provide an extended advertisement. When the estimation result of step S240 indicates that the user's interest in the recommended advertisement in step S230 is less than the reference value, the advertising system 1000 may provide another advertisement.

The advertising system 1000 may expose detailed information of the product related to the provided advertisement based on the user's behavior (S260).

For example, when the user's facial expression is an anger expression while the advertisement is provided, the advertising system 1000 may determine that the user's interest in the advertisement (or the product) is less than the reference value (e.g. no interest).

For another example, when the user's facial expression is a surprising expression while the advertisement is provided, the advertising system 1000 may determine that the user's interest in the advertisement (or the product) is greater than or equal to the reference value (e.g. interested).

For yet another example, when the user's facial expression is a neutral expression or a fear expression while the advertisement is provided, the advertising system 1000 may determine that the user's interest in the advertisement (or the product) is less than the reference value (e.g. no interest).

For yet another example, when the user turns the head, tilts the head back, or turns the body while the advertisement is provided, the advertising system 1000 may determine that the user does not want additional product information to provide another advertisement.

For yet another example, when the user approaches the display device DS10 while the advertisement is provided, the advertising system 1000 may determine that the user wants additional product information to provide additional information of the product.

The advertising system 1000 may perform a purchase procedure for the product when a product is selected by the user or a user's behavior that affirms the product purchase is analyzed (S270).

The advertising system 1000 may accumulate data of each step illustrated in FIG. 6 as deep learning-based learning data, and upgrade the deep learning model using the deep learning-based learning data.

Meanwhile, a method for providing the service of the advertising system 1000 according to another embodiment of the present invention is as follows.

The information analysis unit IA10 of the advertising system 1000 may analyze user information (e.g. first user information) about at least one of sex, age, and eye tracking of a user from the image of the camera and analyze user information (e.g. second user information) about facial expression and eye tacking of the user.

The advertisement providing unit 400 of the advertising system 1000 may determine topic information for the user based on the first user information.

The advertisement providing unit 400 of the advertising system 1000 may display a first advertisement (e.g. informal advertisement) related to the topic information on the display device DS10. Specifically, the advertisement providing unit 400 of the advertising system 1000 may display the first advertisement on the display device DS10 when it is determined that an eye focus of the user faces (watches) a screen area of the display device DS10 based on the eye tracking information of the first user information.

The advertisement providing unit 400 of the advertising system 1000 may determine concentration (e.g. first concentration) indicating the degree of concentration of the user to the first advertisement based on the second user information (e.g. eye motion tracking, user's facial expression. etc.).

The advertisement providing unit 400 of the advertising system 1000 may display a second advertisement (e.g. formal advertisement) including more information than the first advertisement on the display device DS10, based on the first concentration. Specifically, the advertisement providing unit 400 of the advertising system 1000 may calculate the first concentration by eye tracking for the user's eyes when the first advertisement is displayed on the display device DS10. The advertisement providing unit 400 of the advertising system 1000 may determine whether to display the second advertisement based on the user's facial expression and the first concentration for the first advertisement. When the advertisement is displayed on the display device DS10, the eye tracking may include tracking whether the user's eye focus is out of the screen area of the display device DS10 and how long the eye focus is out of the screen area. The user's facial expression may include a degree of change in the brow (a distance between two eyebrows), a degree of change in the shape of the mouth, a degree of change in the mouth tail (both corners of the mouth), and the like.

The advertisement providing unit 400 of the advertising system 1000 may determine whether to continuously display the second advertisement on the display device DS10, based on the second concentration indicating the degree of concentration of the user in the second advertisement and the user's facial expression of the second advertisement.

The information analysis unit IA10 of the advertising system 1000 may analyze user information (e.g. third user information) about a behavior taken by the user while an advertisement (e.g. informal advertisement or formal advertisement) is displayed on the display device DS10. The user's behavior may include, for example, a behavior of turning the body or the head, a behavior and a degree of shaking a hand, a hand motion, a degree of change in distance between the display device DS10 and the user's face, a behavior and a degree of interfacing the display device DS10 (e.g. a behavior of touching the display device DS10), a behavior and a degree of moving the head, and the like.

The advertisement providing unit 400 of the advertising system 1000 may determine whether to provide an advertisement (e.g. whether to provide a formal advertisement) or whether to provide additional product information related to the advertisement, based on the third user information.

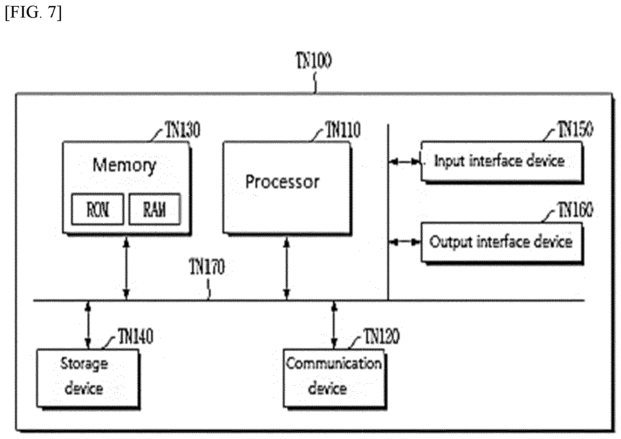

FIG. 7 is a diagram illustrating a computing device according to an embodiment of the present invention. A computing device TN100 of FIG. 7 may be a device (e.g. a device applied to the advertising system 1000, etc.) described in this specification. For example, the computing device TN100 may be the information analyzing device 600. For another example, the computing device TN100 may be an advertisement providing device including the advertisement providing unit 400. For yet another example, the computing device TN100 may be a purchase processing device including the purchase processing unit 500.

In an example of FIG. 7, the computing device TN100 may include at least one processor TN110, a communication device TN120, and a memory TN130. Further, the computing device TN100 may further include a storage device TN140, an input interface device TN150, an output interface device TN160, etc. The components included in the computing device TN100 may be connected to each other by a bus TN170 to communicate with each other.

The processor TN110 may execute a program command stored in at least one of the memory TN130 and the storage device TN140. The processor TN110 may refer to a central processing unit (CPU), a graphics processing unit (GPU), or a dedicated processor on which the methods according to the embodiment of the present invention are performed. The processor TN110 may be configured to implement the procedures, functions, methods, and the like described in relation to the embodiment of the present invention. The processor TN110 may control each component of the computing device TN100.

Each of the memory TN130 and the storage device TN140 may store various information related to an operation of the processor TN110. Each of the memory TN130 and the storage device TN140 may be configured as at least one of a volatile storage medium and a nonvolatile storage medium. For example, the memory TN130 may be configured as at least one of a read only memory (ROM) and a random access memory (RAM).

The communication unit TN120 may transmit or receive a wired signal or a wireless signal. The communication unit TN120 may be connected to a network to perform communication.

Meanwhile, the embodiments of the present invention described in this specification may be coupled (or mixed, combined, merged) in various methods.

On the other hand, the embodiment of the present invention is not implemented only by the devices and/or the methods described so far, but may be implemented by a program that realizes a function corresponding to the configuration of the embodiment of the present invention or a recording medium on which the program is recorded. Such implementations will be readily made by those skilled in the art from the description of the above-described embodiments.

While the embodiments of the present invention are described above in detail, it is to be understood that the scope of the present invention is not limited thereto, and various modifications and changes of those skilled in the art using a basic concept of the present invention which is defined in the appended claims are also included in the scope of the present invention.

## Claims

1. An advertising system comprising:
an information analysis unit configured to analyze first user information about at least one of sex, age, and eye tracking of a user and analyze second user information about a facial expression and eye tracking of the user, from an image of a camera; and
an advertisement providing unit configure to determine topic information for the user based on the first user information and display a first advertisement associated with the topic information by a display device,
wherein the advertisement providing unit determines a first concentration indicating the degree of concentration of the user in the first advertisement based on the second user information and displays a second advertisement including more information than the first advertisement based on the first concentration.

2. The advertising system of claim 1, wherein when the first advertisement is displayed on the display device, the advertisement providing unit calculates the first concentration by eye tracking for the eyes of the user and determines whether to display the second advertisement based of the user's facial expression and the first concentration for the first advertisement.

3. The advertising system of claim 2, wherein the advertisement providing unit determines whether to continuously display the second advertisement on the display device, based on the second concentration indicating the degree of concentration of the user in the second advertisement and the user's facial expression of the second advertisement.

4. The advertising system of claim 1, further comprising:
a purchase processing unit configured to perform a payment processing on the product when order information about a product related to the first advertisement or the second advertisement is input.

5. The advertising system of claim 4, wherein the purchase processing unit transmits the order information to a mobile terminal having a payment processing function wirelessly when the order information on the product is input.

6. The advertising system of claim 1, wherein the display device is installed in a customer's seat in a transportation means for transporting people, and
the first advertisement and the second advertisement are displayed in a first screen area of the display device and the product is displayed in a second screen area of the display device.

7. The advertising system of claim 1, wherein the information analyzing unit tracks the user from the image, recognizes the user's facial expression, estimates the user's sex, and estimates the user's age by using an AI algorithm including an object tracking algorithm, a facial expression recognition algorithm, a sex estimating algorithm, and an age estimating algorithm.

8. The advertising system of claim 6, wherein the advertisement providing unit changes advertisement providing by using a matching result between the user's behavior and a predefined behavior pattern.

9. The advertising system of claim 1, wherein when the first advertisement is displayed on the display device, the eye tracking includes tracking whether the user's eye focus is out of the screen area of the display device and how long the eye focus is out of the screen area.

10. The advertising system of claim 1, wherein the advertisement providing unit displays the first advertisement on the display device when it is determined that the eye focus of the user faces the screen area of the display device based on the eye tracking information of the first user information.

11. The advertising system of claim 8, wherein the user's behavior includes at least one of a behavior of turning the head or the body of the user, a behavior of shaking a hand, and a behavior of approaching the display device while the first advertisement is displayed on the display device.

12. A method for providing a service relating to advertising and product purchase by an advertising system, comprising:
analyzing first user information about at least one of sex, age, and eye tracking of a user and second user information about a facial expression and eye tracking of the user, from an image of a camera;
determining topic information for the user based on the first user information;
displaying a first advertisement related to the topic information on a display device;
determining a first concentration indication the degree of concentration of the user in the first advertisement based on the second user information; and
displaying a second advertisement including more information than the first advertisement on the display device based on the first concentration and the user's facial expression for the first advertisement.

13. The method for providing the service of claim 12, wherein when the first advertisement is displayed on the display device, the eye tracking includes tracking whether the user's eye focus is out of the screen area of the display device and how long the eye focus is out of the screen area.

14. The method for providing the service of claim 12, wherein the analyzing includes analyzing third user information about a behavior taken by the user while the first advertisement is displayed on the display device, and
the displaying includes determining whether to provide the second advertisement or whether to provide additional product information related to the first advertisement, based on the third user information.

15. The method for providing the service of claim 12, further comprising:
performing a payment processing on the product when order information about a product related to the first advertisement or the second advertisement is input.
